# EUROPÄISCHE PATENTANMELDUNG

(11) **EP 0 725 201 A1**
(43) Veröffentlichungstag der Anmeldung: **07.08.1996**
(21) Anmeldenummer: 96890016.7
(22) Anmeldetag: 05.02.1996
(51) Int. Cl.: E05F 15/14, E05F 15/10, F16D 51/00, F16D 41/00

(54) **Antrieb für Türen, insbesondere für Fahrzeugtüren**

(30) Priorität: 06.02.1995 AT 207/95
(71) Anmelder: IFE Industrie-Einrichtungen Fertigungs-Aktiengesellschaft, A-3340 Waidhofen a.d. Ybbs (AT)
(72) Erfinder: Fink, Martin, Ing., A-3340 Waidhofen a.d. Ybbs (AT)
(74) Vertreter: Patentanwälte BARGER, PISO & PARTNER

(57) **Zusammenfassung**

Die Erfindung betrifft einen Antrieb für Türen, deren Antrieb eine rotierbare Spindel (11) umfaßt, die mit einem Freilauf in Wirkverbindung steht, wobei der Freilauf eine rotierbare Trommel (1), die mit der Spindel (11) drehfest verbunden ist aufweist, weiters im Inneren der Trommel in Umfangsrichtung in vorgegebenen Grenzen beweglichen Klemmkörpern, wie Bremskugeln (5), denen jeweils eine drehfeste Keilfläche (15) zumindest einer in Umfangsrichtung feststehenden Bremsbacke zugeordnet ist.

Erfindungsgemäß wird der Freilauf dadurch lösbar ausgebildet, daß die Keilfächen (15) radial beweglich sind und daß ihre radiale Verstellung bevorzugt durch Verdrehen einer Schaltnocke (10) erfolgt.

## Beschreibung

Die Erfindung betrifft einen Antrieb für ein- oder zweiflügelige Schiebe-, Schwenkschiebe- oder Taschentüren, insbesondere Fahrzeugtüren, deren Antrieb eine rotierbare Spindel umfaßt, die mit einem Freilauf in Wirkverbindung steht, wobei der Freilauf eine rotierbare Trommel, die mit der Spindel drehfest verbunden ist aufweist, weiters im Inneren der Trommel in Umfangsrichtung in vorgegebenen Grenzen beweglichen Klemmkörpern, wie Bremskugeln, denen jeweils eine drehfeste Keilfläche zumindest einer in Umfangsrichtung feststehenden Bremsbacke zugeordnet ist.

Dabei ist die Drehung der Spindel in der Richtung, die der Türschließrichtung entspricht, immer möglich, in der anderen, der Türöffnungsrichtung entsprechenden Richtung aber nicht. Durch diese Maßnahme erreicht man, daß die Türe auch bei ausgefallenem Motor und/oder Steuerung händisch geschlossen werden kann, daß ein Öffnen aber nur im regulären Betrieb (oder händisch nach Betätigen einer Notentriegelung, somit nicht unbeabsichtigt oder unerwartet) möglich ist.

Dazu ist bei vorbekannten Vorrichtungen vorgesehen, den an der Blockierung teilnehmenden und an sich nicht rotierenden Teil des Freilaufes, gegebenenfalls den ganzen Freilauf samt seinem Gehäuse, drehbar zu lagern und mit einer lösbaren Bremse zu fixieren. Solange die Bremse fixiert ist, ist die Wirkungsweise des Freilaufes ganz konventionell: In einer Drehrichtung erlaubt er die Bewegung der Spindel, in der anderen blockiert er sie. Wird nun eine Drehung der Spindel in der Blockierrichtung gewünscht (um die Türe zu öffnen), so wird die Bremse von der Türsteuerung gelöst und die Spindel kann mitsamt dem blockierten Freilauf in der Blockierrichtung verdreht werden.

Eine derartige Vorrichtung ist in der Anmeldung PCT/AT94/00146 beschrieben. Diese Anmeldung ist noch nicht veröffentlicht, doch sind Vorrichtungen, die dieser Anmeldung entsprechen, offenkundig vorbenutzt.

Diese Vorrichtungen arbeiten an sich zufriedenstellend und haben sich in der Praxis bewährt. Einen gewissen Nachteil stellen die relativ hohen Gestehungskosten dar, da nicht nur ein Freilauf, sondern auch eine passende Bremse, entsprechend aufeinander abgestimmt, eingesetzt werden muß. Ein anderer Nachteil, der in der Praxis oft schwerwiegender ist, ist der relativ große beanspruchte Raum, den die vorbekannte Einrichtung benötigt.

Es ist gegenüber dem Stand der Technik Ziel der Erfindung, eine Einrichtung zu schaffen, die kompakt aufgebaut ist und aus weniger Teilen besteht als die vorbekannte Einrichtung.

Bevor die erfindungsgemäße Lösung dargetan wird, soll im folgenden kurz der Aufbau eines Freilaufes gemäß dem Stand der Technik erläutert werden: Ein derartiger Freilauf besteht aus einer rotierbaren Trommel, die mit der Spindel od.dgl., auf die der Freilauf wirken soll, drehfest verbunden ist. Im Inneren der Trommel sind beweglich, aber nicht frei rotierbar, Klemmkörper (Kugeln, Rollen, aber auch nicht drehsymmetrische Klemmkörper od.dgl.) angeordnet, denen jeweils eine feststehende Keilfläche einer (gegebenenfalls für alle Keilflächen gemeinsamen) ortsfesten Bremsbacke zugeordnet ist. Im folgenden werden als Klemmkörper Kugeln genannt, doch können selbverständlich alle Arten von Klemmkörpern verwendet werden.

Die Keilfläche umfaßt zwie Bereiche: Einen Bereich, in dem der Abstand zwischen Keilfläche und Trommelinnenwand größer ist als der Durchmesser der Klemmkörper und einen Bereich, in dem dieser Abstand kleiner ist. Das Ende der Keilfläche mit dem größeren Abstand weist eine radial nach außen vorspringende Nase od.dgl. auf, die verhindert, daß die Klemmkörper den ihnen zugeordneten Raum verlassen. Die Bremsbacken sind gegenüber der Umgebung drehfest angeordnet (beim eingangs beschriebenen lösbaren Rücklauf mittels einer Bremse fixiert) und die Kugeln erlauben die Drehung der Trommel in der Richtung, in der sie gegen die Nase der Keilfläche gedrückt werden und sperren die Drehung in der Richtung, in der sie von der Trommel mitgenommen und in den Konus zwischen Trommel und Keilfläche gedrückt werden und schließlich durch Reibung eine feste Verbindung zwischen der Keilfläche und der Innenfläche des Trommelmantels schaffen.

Erfindungsgemäß ist nun bei einem derartigen Freilauf zur Erreichung der eingangs genannten Ziele vorgesehen, daß die Keilfächen radial beweglich sind und daß bevorzugt ihre radiale Verstellung durch Verdrehen einer Nocke und dem Zusammenwirken zumindest eines Steuerflächenpaares zwischen der Nocke und des Keilflächenkörpers erfolgt.

Die Erfindung wird im folgenden an Hand einiger Ausführungsbeispiele näher erläutert. Dabei zeigt
die Fig. 1 einen Axialschnitt durch eine erfindungsgemäße Vorrichtung mit einem koaxial zur Spindel anordneten Motor,
die Fig. 2 einen Schnitt entlang der Linie II-II in Fig. 1,
die Fig. 3 eine erfindungsgemäße Vorrichtung zwischen zwei koaxial angordneten Spindeln,
die Fig. 4 einen Schnitt entlang der Linie IV-IV in Fig. 3,
die Fig. 5 eine Variante der Fig. 3 mit nur einer Spindel,
die Fig. 6 eine Variante der Fig. 4 mit einer hydraulischen Betätigungseinrichtung und
die Figa. 7 bis 13 die Lage der einzelnen Bauteile der erfindungsgemäßen Vorrichtung während der einzelnen Phasen des Aktivierens bzw. Lösens des Freilaufes.

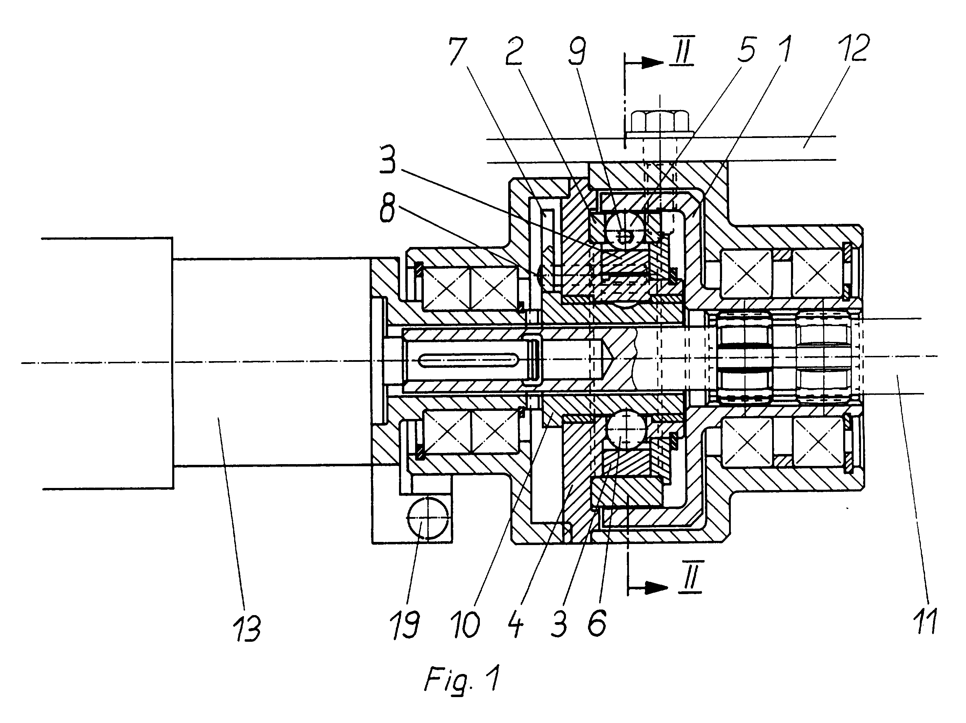

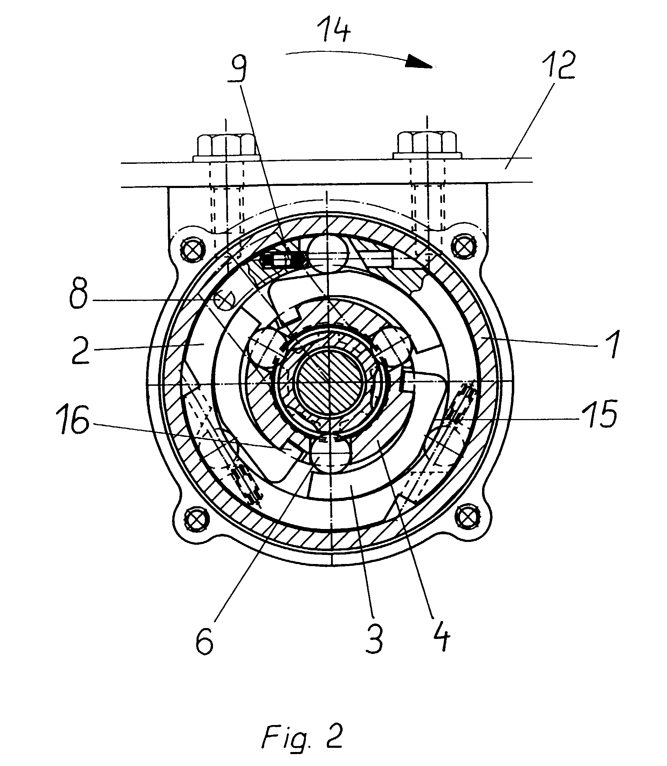

Der Aufbau der erfindungsgemäßen Vorrichtung, wie er den Fig. 1 und 2 entnommen werden kann, ist folgender: Eine Spindel 11 ist mittels eines Motors 13 in beide Richtungen verdrehbar. Bei abgeschaltenem Motor soll die Spindel in Richtung des Pfeiles 14 (Türöffnungsrichtung) blockiert sein, gegen die Richtung des Pfeiles 14 aber frei verdrehbar sein.

Dazu ist eine rotierbare Trommel 1 drehfest mit der Spindel 11 verbunden. Im Inneren der rotierbaren Trommel 1 befindet sich ein in gewissen Grenzen verdrehbarer Kugelkäfig 2, in dem Bremskörper, beispielsweise Rollen oder, wie im gezeigten Beispiel, Bremskugeln 5 innerhalb gewisser Grenzen in Umfangsrichtung beweglich angeordnet sind. Bevorzugt sind drei Bremskörper vorgesehen, doch ist es möglich, nur zwei oder auch mehr als drei derartige Bremskörper zu verwenden.

Die Bremskugeln 5 liegen, in radialer Richtung gesehen, zwischen der Innenfläche der rotierbaren Trommel 1 und Keilflächen 15 von Bremsbacken 3. Dabei ist jeder Bremskugel 5 eine (nicht rotierbare) Bremsbacke 3 mit einer entsprechenden Keilfäche 15 zugeordnet. Die Keilflächen 15 verlaufen radial (in Umfangsrichtung gesehen) so, daß sie ähnlich wie ein Keil ansteigen, so daß der zwischen den Keilfächen 15 und der inneren Trommelfläche freibleibende konusförmige Raum zwei Bereiche aufweist.

Einen Bereich, in dem Abstand zwischen diesen beiden Bauteilen größer ist als der Durchmesser der zugehörigen Bremskugel 5 und einen daran anschließenden Bereich, in dem dieser Abstand kleiner ist als der Durchmesser der Bremskugel. Durch die stetige Änderung dieses Abstandes kommt es zum zuverlässigen Festklemmen der Bremskugel und durch den Reibungsschluß zum Blockieren der rotierbaren Trommel, wenn sie einem Drehmoment in Blockierrichtung unterworfen wird.

Erfindungsgemäß ist nun vorgesehen, die Bremsbacken 3 in radialer Richtung in einem solchen Ausmaß beweglich anzuordnen, daß im gelösten Zustand des erfindungsgemäßen Freilaufes die Keilfläche 15 in ihrem gesamten Umfangsbereich einen Abstand zur inneren Mantelfläche der rotierbaren Trommel 1 aufweist, der größer ist als der Durchmesser der Bremskugel 5.

Dies erreicht man beim gezeigten Ausführungsbeispiel dadurch, daß die Bremsbacke 3 eine radial nach innen gerichtete Nase 16 aufweist, die mit Spiel in einer entsprechenden Ausnehmung einer (nicht rotierbaren) Deckelnabe 4 sitzt und um diese Nase 16 verschwenkbar ist. Das Verschwenken erfolgt durch eine radiale Bewegung von (ihre Lage in Umfangsrichtung beibehaltenden) Schaltkugeln 6, die in Durchbrechungen der Deckelnabe 4 sitzen und durch eine Schaltnocke 10, die bezüglich der Deckelnabe begrenzt verdrehbar ist, in radialer Richtung verschiebbar sind.

Dabei werden die Schaltkugeln 6 entweder nach außen gedrückt, wie in Fig. 2 dargestellt, oder können in Vertiefungen der Schaltnocke eindringen, wodurch die Bremsbacken 3 radial entweder nach außen oder nach innen verschwenkt werden und so die Bremskugeln 5 festsetzen oder freigeben.

Ein besonderer Vorteil der erfindungsgemäßen Vorrichtung liegt darin, daß es bei einer direkt mit dem Freilauf verbundenen Anordnung des Antriebsmotors für die Spindel, wie in Fig. 1, 3 und 5 dargestellt, möglich ist, die Bewegung der Schaltnocke direkt vom Reaktionsdrehmoment des Motors abzuleiten, so daß jede zusätzliche Betätigungsvorrichtung entfallen kann.

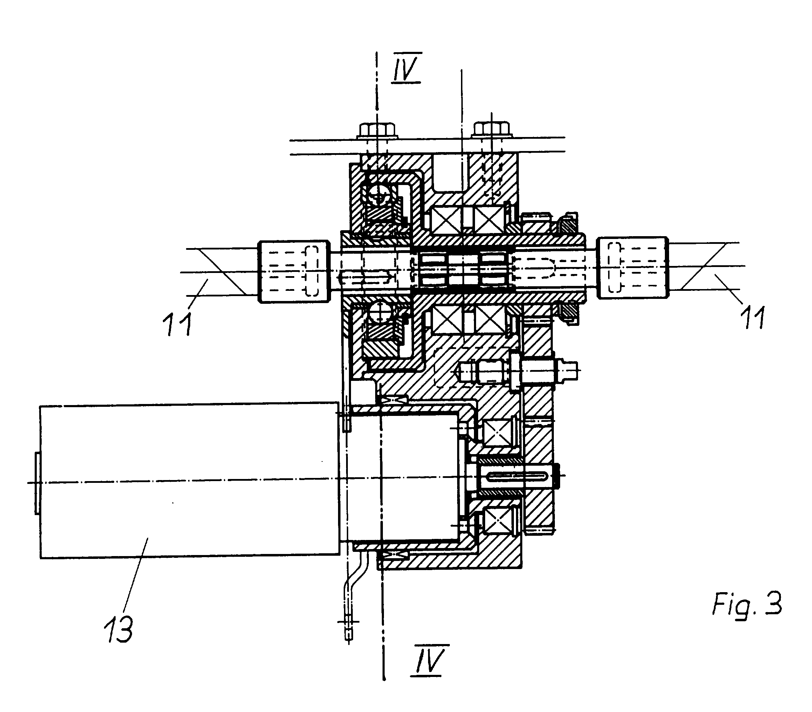

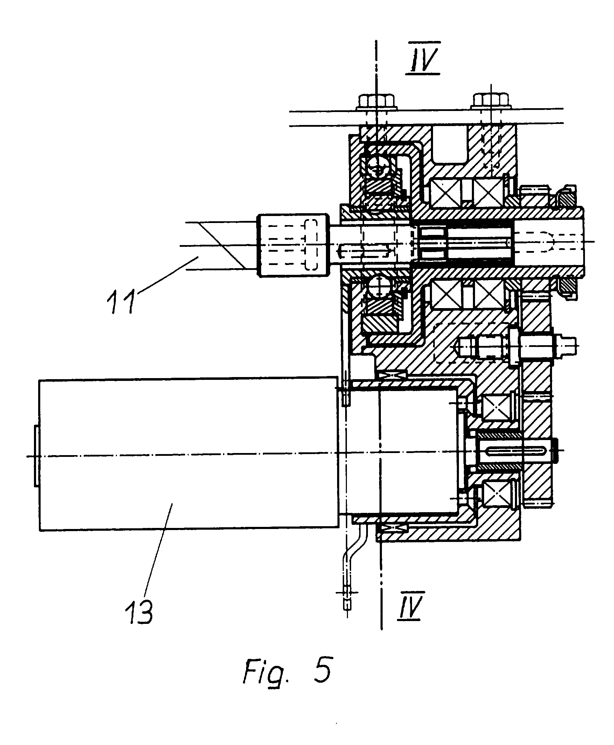

Wie aus den Fig. 3 und 5 ersichtlich ist, kann der Antriebsmotor 13 auch parallel zur Spindel 11 versetzt angeordnet werden, wodurch es möglich wird, die erfindungsgemäße Vorrichtung in die Symmetriebene zwischen zwei Spindel einzubauen. Dies ist in Fig 3 bei einem Anwendungsbeispiel für den Antrieb einer zweiflügeligen Schiebe- oder Schwenkschiebetüre eines Fahrzeugs dargestellt. Dabei ist auch die Ebene der Portalmitte eingezeichnet. Die Kompaktheit der erfindungsgemäßen Vorrichtung erlaubt es auf diese Weise erstmals bei einer zweiflügeligen Fahrzeugtüre, den Antrieb samt der Freilaufeinrichtung in Portalmitte zu installieren, wo die Zugänglichkeit zu Inspektions- und Wartungszwecken am besten ist.

Beim versetzt zur Spindelachse erfolgten Einbau des Motors 13 wird das Reaktionsmoment des Motors am besten über einen Entriegelungshebel 17 übertragen, der einerseits mit einem das Motorreaktionsmoment übertragenden Reaktionshebel 18, beispielsweise ein Teil des drehbar gelagerten Motorgehäuses, und anderseits mit dem Schalthebel 7 verbunden ist. Durch Anschläge 19, 20 wird sowohl die Verdrehbarkeit des Motors als auch der Verdrehwinkel der Schaltnocke 10, die mit dem Schalthebel 7 drehfest verbunden ist, begrenzt.

Das Motordrehmoment selbst wird im gezeigten Beispiel duch Zahnräder übertragen, doch ist die Verwendung von Riemen etc. selbverständlich möglich.

Durch einen Vergleich der Fig. 3 und 5 erkennt man, daß die in diesen Figuren dargestellte Vorrichtung sowohl für nur eine als auch für zwei koaxiale Spindeln verwendbar ist. Es eignet sich daher diese Vorrichtung gleichermaßen zur Verwendung mit einflügeligen und mit zweiflügeligen Türen, was die Herstellungskosten und die Lagerhaltungskosten drastisch reduziert.

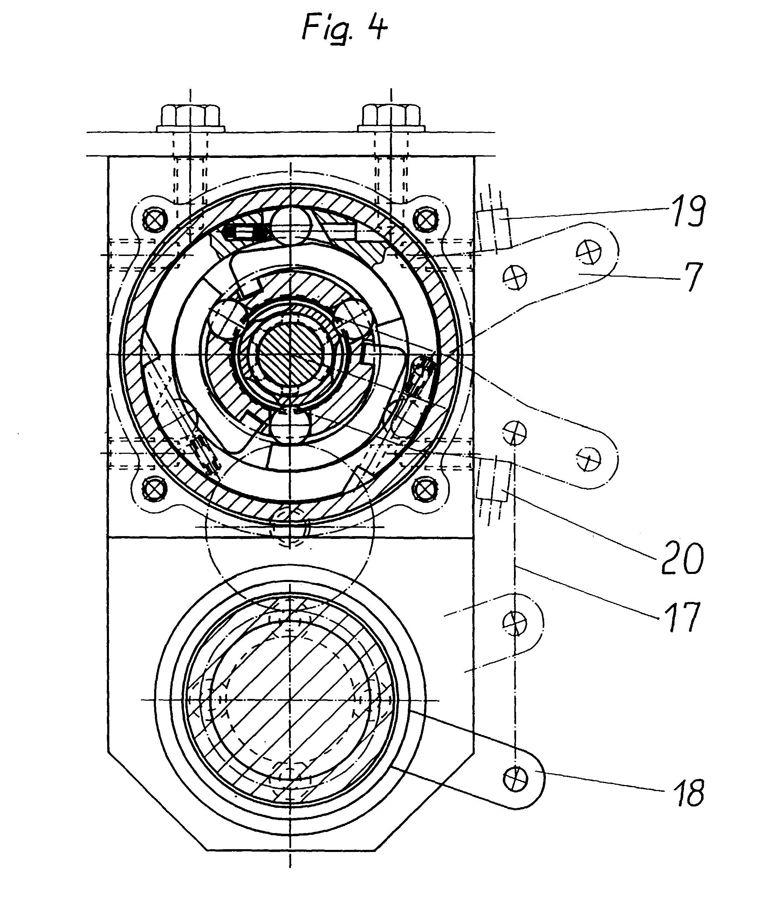

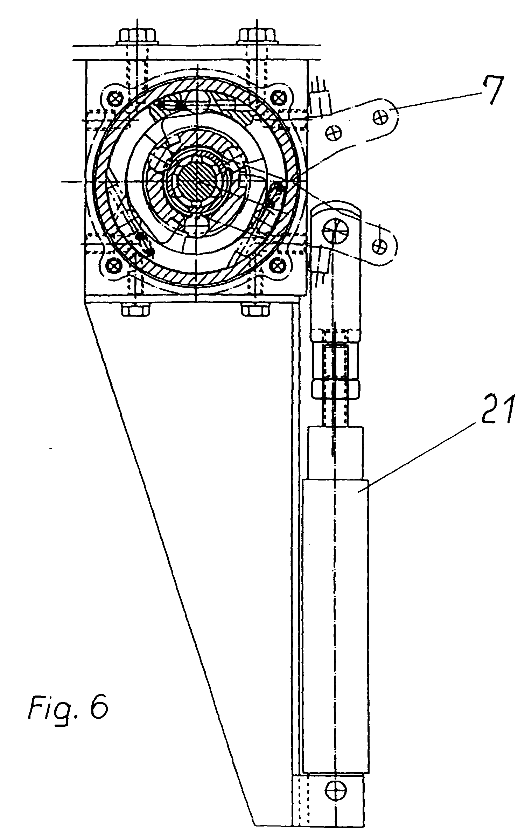

In Fig. 6 ist eine Variante der erfindungsgemäßen Vorrichtung analog zur Fig. 4 dargestellt, die überall dort vorteilhaft verwendet werden kann, wo ein hydraulischer oder pneumatischer Antrieb für die Türe verwendet wird. Dies ist insbesondere bei Fahrzeugtüren der Fall, bei denen häufig eine pneumatische Kolben-Zylinder-Einheit auf einen von zwei Türflügeln wirkt und der andere Türflügel über eine symmetrisch aufgebaute Doppelspindel synchron mitbewegt wird.

In diesem Fall ist es vorteilhaft, einen erfindungsgemäßen Freilauf, wie er in Fig. 3 in direkter Verbindung mit einem elektrischen Antrieb dargestellt ist, ohne derartigen Antrieb in der Mitte der Doppelspindel vorzusehen und den Schalthebel 7 mittels einer hydraulischen oder pneumatischen Kolben-Zylinder-Einheit 21 zu verschwenken. Aus Platz- und Kostengründen ist dabei bevorzugt vorgesehen, daß die Kolben-Zylinder-Einheit 21 einfach wirkend ausgebildet und mit einer Rückholfeder ausgestattet ist.

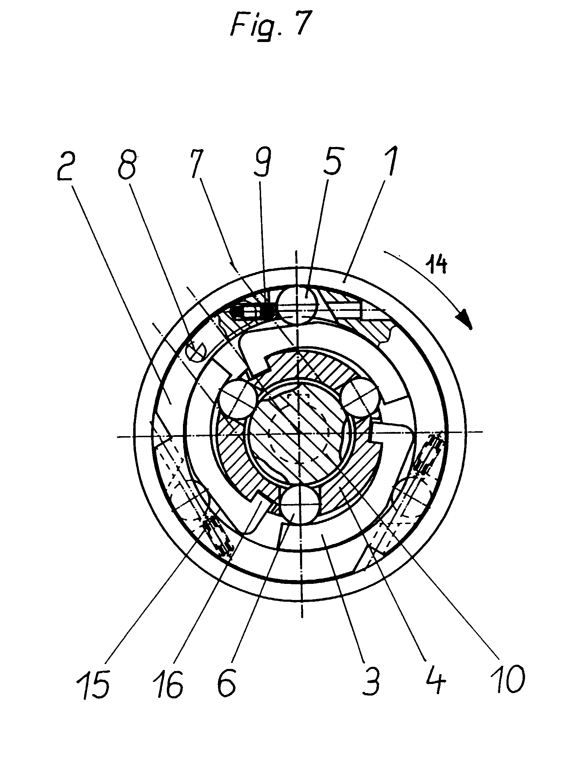

Die Wirkungsweise der erfindungsgemäßen Vorrichtung wird im folgenden an Hand der Fig. 7 bis 13 detailliert erläutert:

Fig. 7 zeigt die Phase 1: der Freilauf ist blockiert, die Bremsbacken 3 sind radial nach außen ausgefahren und die Bremskugeln 5 sind, unter der Wirkung federbelasteter Andrückbolzen 9 in den Konus, der durch die innere Mantelfläche der Trommel 1 und die Keilfäche 15 der Bremsbacke 3 gebildet wird, gedrückt und verhindern so jede Relativverdrehung zwischen den Bremsbacken 3 und der Trommel 1 in Richtung des Pfeiles 14.

Bei einer Verdrehung der Trommel 1 gegen die Richtung des Pfeiles 14 werden die Bremskugeln 5 ein Stück gegen die Kraft der Andrückbolzen 9 mitgenommen, gelangen aus dem engen Bereich des Konus zwischen den Bremsbacken und der Innenfläche der Trommel 1 in den weiteren Bereich des Konus, dessen radiale Erstreckung größer ist als der Durchmesser der Bremskugeln 5 und erlauben so eine Verdrehung der Trommel 1 und somit auch des mit ihr verbundenen Bauteiles (Spindel) in der entsprechenden Richtung (gegen den Pfeil 14).

Wie aus Fig. 7 ersichtlich, liegen die Schaltkugeln 6 auf Mantelbereichen der Schaltnocke 10, die von den Ausnehmungen der Schaltnocke in Umfangsrichtung entfernt sind, so daß auch durch Erschütterungen und Vibrationen ein Eindringen der Schaltkugeln 6 in die Ausnehmungen der Schaltnocke 10 und damit ein Lösen des Freilaufes nicht zu befürchten ist.

Durch die nach außen gedrückte Lage der Schaltkugeln 6 sind die Bremsbacken 3 um ihre Nasen 16 nach außen gedrückt, so daß ihre Keilflächen 15 teilweise einen kleineren Abstand zur inneren Trommelfläche aufweisen als der Durchmesser der Bremskugeln 5.

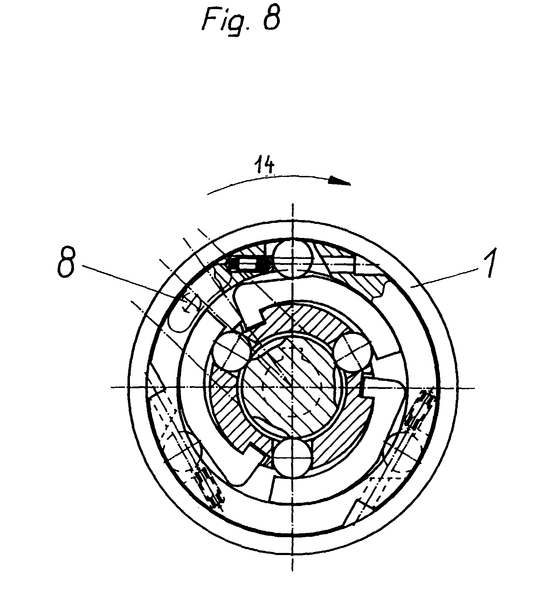

Fig. 8 zeigt die Lage der einzelnen Teile zu Beginn des Lösevorganges des Freilaufes (Phase 2): Auf die Trommel 1 wirkt ein Drehmoment in Richtung des Pfeiles 14, das aber keine Drehbewegung bewirkt, da die Trommel in dieser Richtung blockiert ist. Es kommt daher zur Ausbildung eines Reaktionsmomentes, das entweder, wie in Fig. 1 gezeigt über das Motorgehäuse oder, wie in Fig. 4 gezeigt, über den Entriegelungshebel 17, auf die Schaltnocke wirkt und diese gegen die Richtung des Pfeiles 14 verdreht.

Diese Verdrehung ist bei der in Fig. 8 dargestellten Lage so weit fortgeschritten, daß die Schaltkugeln 6 am Beginn der ihnen jeweils zugeordneten Ausnehmung der Schaltnocke 10 positioniert sind. Gleichzeitig dreht sich der drehfest mit der Schaltnocke 10 verbundene Schalthebel 7 ebenfalls gegen die Richtung des Pfeiles 14, wobei ein Umfangsschlitz im Schalthebel 7 sich entlang eines Mitnehmerzapfens 8 des Kugelkäfigs 2 bewegt, ohne ihn mitzunehmen. Es ist der Freilauf bei der in Fig. 8 dargestellten Lage der einzelnen Bauteile noch vollständig blockiert.

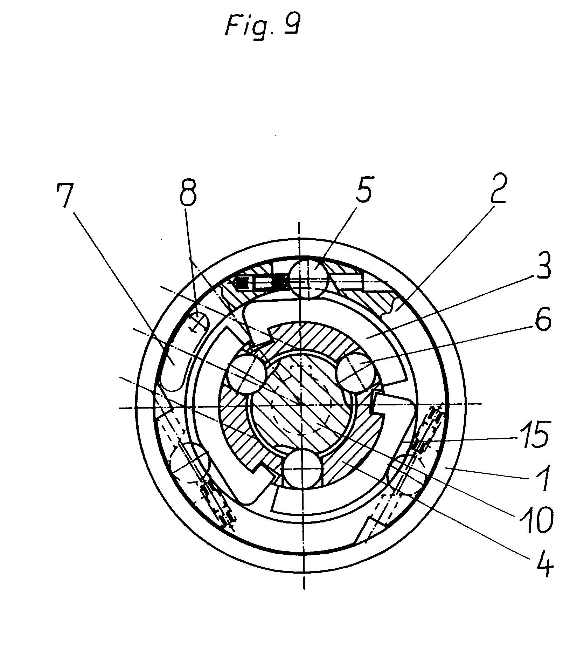

Fig. 9 zeigt die Situation beim weiteren Verdrehen des Schalthebels 7 und synchron dazu der mit ihm verbundenen Schaltnocke 10 (Phase 3): Die Schaltkugeln 6 haben ihre radial innerste Lage erreicht, sie sind zur Gänze in die Vertiefungen der Schaltnocke 10 eingetreten, die Bremsbacken 3 haben ebenfalls ihre radial innerste Lage erreicht und liegen an der Deckelnabe 4 an.

Der Mitnehmerzapfen 8 des Kugelkäfigs 2 ist während des Überganges von der Phase 1 zur Phase 3 von einem Ende im Schlitz des Schalthebels 7 zum anderen gelangt, es hat dabei aber keine Verdrehung des Kugelkäfigs 2 stattgefunden.

Die Bremskugeln 5 wurden durch die federbelasteten Andrückbolzen 9 weiter in den sich während des Übergangs von der Phase 1 zur Phase 3 erweiternden Konus zwischen den Keilflächen 15 und der inneren Mantelfläche der Trommel 1 gedrückt, bis sie durch eine schräge Gegenfläche des Kugelkäfigs 2 an jeder weiteren Bewegung in Umfangsrichtung gehindert und durch die schräge Ausbildung dieser Gegenfläche radial nach innen belastet wurden.

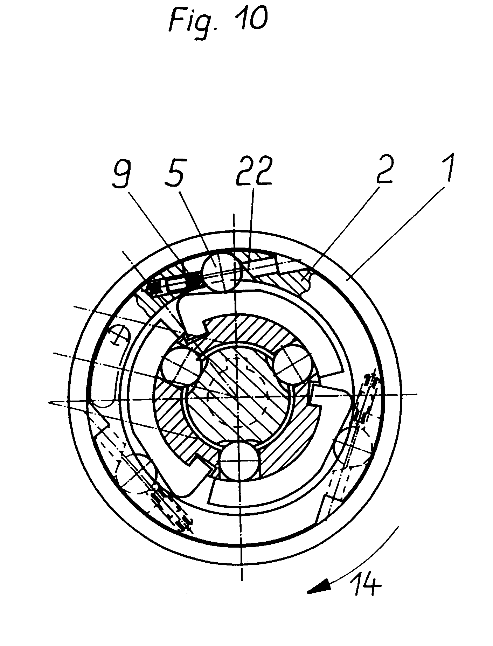

Die Fig. 10 zeigt die Situationen nach Durchführung der Lösebewegung des Kugelkäfigs 2 (Phase 4): In Phase 3 erreichte wie oben ausgeführt, der Mitnehmerzapfen 8 des Kugelkäfigs das Ende des Schlitzes im Schalthebel 7, das am weitesten in Richtung des Pfeiles 14 liegt. Wie ebenfalls ausgeführt, wurde der Kugelkäfig 2 während der Phasen 1 bis 3 nicht bewegt.

Während der Phase 4 erfolgt nun die Verdrehung des Kugelkäfigs 2 durch die Weiterbewegung des Schalthebels 7 (samt Schaltnocke 10) gegen die Richtung des Pfeiles 14. Dabei bewirkt die jeder Bremskugel 5 zugeordnete schräge Fläche 22 im Zusammenwirken mit den federbelasteten Andrückbolzen 9 eine Bewegung der Bremskugel 5 gegen die Richtung des Pfeiles 14.

Durch die Schrägstellung der Flächen 22 wirkt eine radiale Kraftkomponente auf die Bremskugel 5 zur Achse des Freilaufes hin und es kommt zum Abheben der Kugeln 5 von der inneren Mantelfläche der Trommel 1, was ein Schleifen der Kugeln an dieser Mantelfläche beim Verdrehen der Trommel 1 in Richtung des Pfeiles 14 verhindert und zugleich ein leichtes Verdrehen der Trommel 1 sicherstellt. Dieses Verdrehen der Trommel 1 setzt nunmehr zufolge des Motordrehmomentes ein und bewirkt ein analoges Verdrehen der Spindel 11.

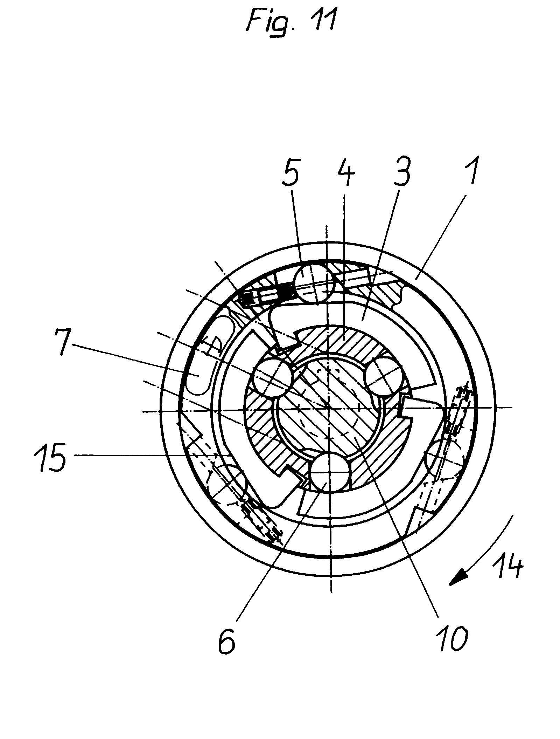

In Fig. 11 ist die Situation dargestellt, die sich ergibt, wenn die Trommel 1 im Zuge einer Verdrehbewegung gegen die Richtung des Pfeiles 14 durch ein äußeres Drehmoment, beispielsweise wenn die mit der Spindel 11 verbundene Türe die Geschlossenstellung erreicht hat, abgebremst wird und durch das so bewirkte erhöhte Motordrehmoment die Verriegelstellung des Freilaufes, die während der normalen Bewegung nicht erreicht wurde, wieder eingenommen wird

Phase 5: Durch die Umkehr des Bewegungsvorganges im Vergleich zu dem in den Fig. 7 bis 10 dargestellten Ablauf wird durch das Reaktionsmoment der Schalthebel 7, von dem in Fig. 11 nur die mit ihm verbundene Schaltnocke 10 und die Ausnehmung erkennbar ist, in Richtung des Pfeiles 14 verdreht. Bei der dargestellten Phase 5 beginnen die Schaltkugeln 6 gerade mit ihrer axial nach außen gerichteten Bewegung zufolge ihres Ausstieges aus den Vertiefungen der Schaltnocke 10, doch noch liegen die Bremsbacken 3 an der Deckelnabe 4 an, so daß die Keilflächen 15 noch ihre radial innere Lage einnehmen.

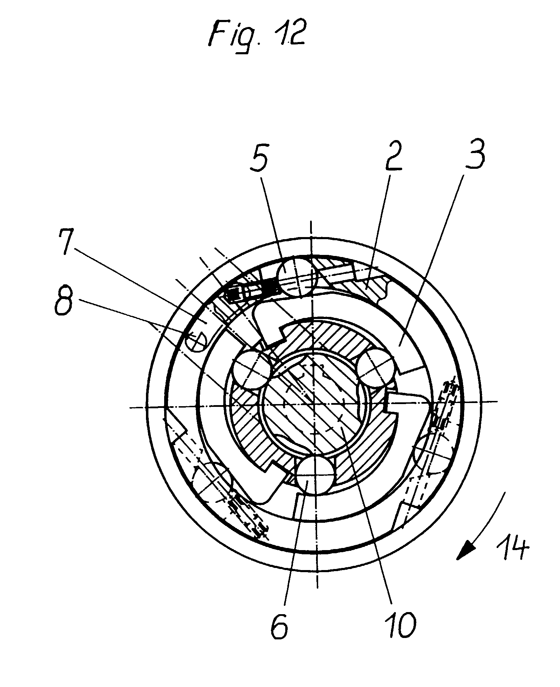

In Fig. 12 ist das weitere Fortschreiten des Verriegelungsvorganges erkennbar (Phase 6): Die Schaltkugeln 6 sind zur Gänze aus den Vertiefungen der Schaltnocke 10 geklettert, befinden sich aber noch am Rand dieser Vertiefung. Gleichermaßen sind die Bremsbacken 3 bereits nach außen verschwenkt und der Mitnehmerzapfen 8 ist an das Ende der Ausnehmung des Schalthebels 7 gelangt, das, in Richtung des Pfeiles 14 gesehen, am hinteren Ende liegt. Die Schaltnocke 10 und der Schalthebel 7 haben sich weiter in Richtung des Pfeiles 14 gedreht.

Bis zu der gezeigten Lage hat sich vom Beginn der Phase 5 an der Kugelkäfig 2 nicht verdreht, wenn auch die Bremskugeln 5 durch die radial nach außen erfolgte Bewegung der Bremsbacken 6 bereits die Bremsposition erreicht haben.

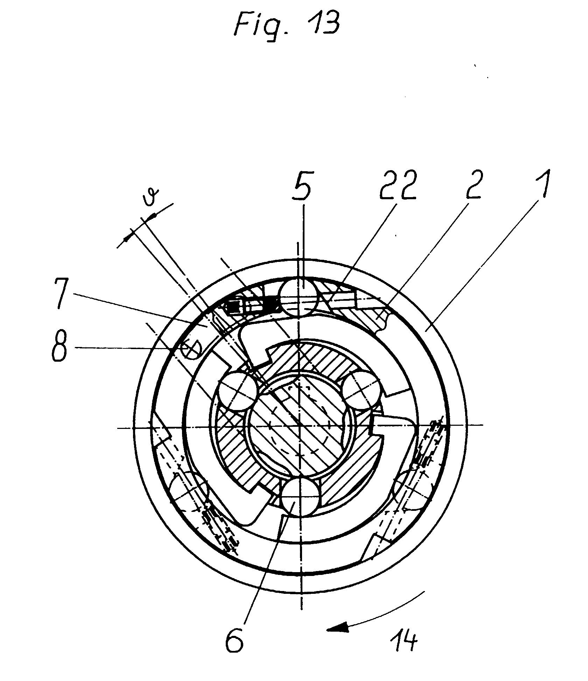

In Fig. 13 ist schließlich die Situation der Fig. 7 (Phase 1) fast wieder erreicht: Der Kugelkäfig 2 wurde durch Weiterdrehen des Schalthebels 7 Richtung des Pfeiles 14 ein Stück verdreht und so wurden die Bremskugeln 5 wieder in den Bremskonus zwischen den Keilflächen 15 und der inneren Mantelfläche der Trommel 1 gebracht, liegen aber auch noch an den schrägen Flächen 22 an. Die federbelasteten Andrückbolzen 9 halten die Kugeln in dieser Lage.

Durch das Weiterdrehen des Kugelkäfigs um den Winkel 6 nach Erreichen der in Fig. 13 dargestellten Phase 7, gelangt man zurück zur Lage der Phase 1 (Fig. 7). Dieses Weiterdrehen erfolgt, um ein sicheres Abheben der Bremskugeln 5 von den schrägen Flächen 22 des Kugelkäfigs zu sichern und so einen sicheren Reibungsschluß zu erzielen.

Die Einhaltung der verschiedenen Bewegungsphasen und insbesonders das während des Verriegelns zuerst erfolgende Ausfahren der Bremsbacken und das anschließende Eindrücken der Bremskugeln in den Bremskonus ist aus Sicherheitsgründen angeraten, um zu verhindern, daß die Bremsbacken radial nach außen gedrückt werden, wenn die Bremskugeln 5 sich im Bremskonus befinden. Es könnte dann zu einer Beschädigung oder Zerstörung der Vorrichtung durch zu große Kräfte an den Schaltkugeln oder der entsprechenden Schaltfläche der Bremsbacken oder auch beim Kontakt zwischen den Bremskugeln und dem Bremsbacken kommen. Dieses zeitliche Aufeinanderfolgen der einzelnen Bewegungen wird durch Größe und Lage des Schlitzes im Schalthebel 7 sichergestellt.

Die federbelasteten Andrückbolzen 9 haben die Aufgabe, Fertigungsungenauigkeiten und Toleranzen auszugleichen und dabei sicherzustellen, daß alle (im gezeigten Beispiel drei) Bremskugeln 5 tatsächlich die Blockierstellung erreichen und Bremswirkung ausüben. Beim Andrücken der Kugeln 5 durch eine starre Ebene des Kugelkäfigs 2 wäre dies aus den obengenannten Gründen nicht sichergestellt.

Die Erfindung kann auf verschiedenste Weise variiert und abgeändert werden und muß nicht die dargestellte Ausbildung aufweisen. So ist es möglich, statt der Bremskugeln und/oder statt der Schaltkugeln Wälzkörper oder auch nicht rotationssymmetrische Körper zu verwenden, um die Pressungen im Berührbereich zu verringern, auch ist es möglich, die radiale Bewegung der Bremsbacken 3 auf andere Weise als mittels Schaltkugeln zu bewirken, es kann dabei an ein direktes Zusammenwirken mit einer Nocke gedacht werden, oder auch an Verstellhebel, die in Form von Kniehebelmechanismen od.dgl. eine direkte Verstellung bewirken. Je nach Anwendungsgebiet und auftretenden Kräften ist auch der oben geschilderte zeitliche Nachlauf der Bewegung des Kugelkäfigs 2 nicht immer notwendig.

Es ist auch, wie die Fig. 6 zeigt, nicht notwendig, den erfindungsgemäßen Freilauf direkt mit einem Motor für die Trommel 1 oder einen damit drehfest verbundenen Bauteil zu kombinieren, wenn dies auch wegen der Möglichkeit, das Motorreaktionsdrehmoment zum Entriegeln des Freilaufes zu verwenden, in vielen Anwendungsfällen günstig ist.

Bei der Kombination mit einem Motor 13 ist (Fig. 1) die koaxiale Anordnung zu der Trommel 1 mit direktem Antrieb der damit verbundenen Spindel gezeigt und (Fig. 3 und 5) die versetzte Parallelanordnung mit Übertragung des Motordrehmoments mittels Zahnrädern. Es ist selbstverständlich möglich, das Motordrehmoment durch Riemen od.dgl. zu übertragen, ohne daß sich am Aufbau der erfindungsgemäßen Vorrichtung etwas ändern müßte.

Ist der Motor nicht mit dem erfindungsgemäßen Freilauf verbunden, ist es möglich, statt der in Fig. 6 gezeigten hydraulischen oder pneumatischen Zylinder-Kolben-Einheit einen elektrischen Antrieb (Hubmagnet od.dgl.) oder, wenn nur in Ausnahmefällen ein Lösen erwünscht ist, eine händische Betätigung zu verwenden.

Es ist ein Leichtes, über die Verschwenkbewegung des Schalthebels 7 zwischen den Anschlägen 19, 20 eine händische Notbetätigungsvorrichtung, wie sie in den Fig. 4 und 6 schematisch mittels eines Pfeiles am Schalthebel 7 angedeutet ist, vorzusehen.

Die Bezeichnung "drehfeste Verbindung", die für die Verbindung zwischen der Spindel und der Trommel in der Anmeldung und den Ansprüchen verwendet wird, umfaßt auch Verbindungen mittels Riemen, Ketten oder zwischengelagerten Getrieben und bedeutet, daß eine definierte Verdrehung des einen Bauteiles eine definierte Verdrehung des anderen Bauteiles bewirkt.

Auch bei hydraulischen und pneumatischen Antrieben ist es möglich, das Reaktionsmoment beim Öffnen der Türe zum Lösen des Freilaufes zu verwenden: Dazu muß nur die Kolben-Zylinder-Einheit, die ja notwendigerweise zwischen einem türseitigen und einem türrahmenseitigen Angriffspunkt angeordnet ist, so gelagert werden, daß einer der Angriffspunkte beim Beaufschlagen der Kolben-zylinder-Einheit mit Druck gegen die Kraft einer Feder verschoben wird und daß durch diese Verschiebung direkt, oder über ein Gestänge, die radiale Verstellung der Bremsbacken erfolgt.

Die Art der Türkonstruktion, insbesonders deren Führung, Aufhängung und Steuerung hängt mit der erfindungsgemäßen Vorrichtung nicht unmittelbar zusammen, ist dem Fachmann auf dem Gebiete des Türenbaus geläufig und braucht daher an dieser Stelle nicht erläutert zu werden. Es spielt auch keinerlei Rolle, ob die Spindel, auf die der Freilauf wirkt, und damit dieser selbst, bezüglich des Türrahmens orstfest oder beweglich montiert ist. Letzteres ist insbesonders bei Schwingschiebetüren möglich, bei denen die Spindel die Ausstellbewegung der Türe mitmacht.

## Patentansprüche

1. Antrieb für ein oder zweiflügelige Schiebe-, Schwenkschiebe- oder Taschentüren, insbesondere Fahrzeugtüren, deren Antrieb eine rotierbare Spindel (11) umfaßt, die mit einem Freilauf in Wirkverbindung steht, wobei der Freilauf eine rotierbare Trommel (1), die mit der Spindel (11) drehfest verbunden ist aufweist, weiters im Inneren der Trommel in Umfangsrichtung in vorgegebenen Grenzen beweglichen Klemmkörpern, wie Bremskugeln (5), denen jeweils eine drehfeste Keilfläche (15) zumindest einer in Umfangsrichtung feststehenden Bremsbacke zugeordnet ist, dadurch gekennzeichnet, daß die Keilfächen (15) radial beweglich sind und daß ihre radiale Verstellung bevorzugt durch Verdrehen einer Schaltnocke (10) erfolgt.

2. Antrieb nach Anspruch 1 mit elektrischem Motor (13), dadurch gekennzeichnet, daß der Motor (13) am Gehäuse des Freilaufes befestigt ist und daß die Verstellung der Bremsbacken (3), gegebenenfalls durch Verdrehen der Schaltnocke (10), durch das Reaktionsmoment des Motors direkt oder über ein Gestänge (18, 17 und 7) erfolgt.

3. Antrieb nach Anspruch 1 mit hydraulischer oder pneumatischer Antriebseinheit, die zwischen einem türrahmenseitigen und einem türseitigen Angriffspunkt angeordnet ist, dadurch gekennzeichnet, daß einer der Angriffspunkte gegen die Kraft einer Feder verschieblich ist und daß durch diese Verschiebung direkt, oder über ein Gestänge, die radiale Verstellung der Bremsbacken (3) erfolgt.

4. Antrieb nach einem der Ansprüche 1 bis 3, dadurch gekennzeichnet, daß jede Keilfläche (15) auf einer eigenen schwenkbaren Bremsbacke (3) nahe der Schwenkachse angeordnet ist und daß die Schaltnocke (10) auf den der Schwenkachse fernen Bereich der Bremsbacke (3) wirkt.

5. Antrieb nach einem der voranstehenden Ansprüche, dadurch gekennzeichnet, daß die Schaltnocke (10) radial innerhalb einer drehfesten Deckelnabe (4) angeordnet ist, die die Schwenkachsen der Bremsbacken (3) trägt und daß die Bewegung der Schaltnocke (10) durch Schaltkörper, z.Bsp. Schaltkugeln (6), die in Durchlässen der Deckelnabe sitzen, auf die Bremsbacken übertragen wird.

6. Antrieb nach Anspruch 5, dadurch gekennzeichnet, daß die Schaltnocke (10) hülsen- bzw. rohrförmig ausgebildet ist, und daß die Spindel (11), auf die der Freilauf wirkt, ihn durchsetzt.

7. Antrieb nach einem der voranstehenden Ansprüche, dadurch gekennzeichnet, daß die Klemmkörper, wie Bremskugeln (5), in Ausnehmungen eines Käfigs (2) angeordnet sind, daß die Erstreckung der Ausnehmungen in Umfangsrichtung größer ist als die Erstreckung der Klemmkörper und daß der Käfig (2) bezüglich der Keilflächen (15) in Umfangsrichtung beweglich ist.

8. Antrieb nach Anspruch 7, dadurch gekennzeichnet, daß im Käfig (2) federbelastete Andrückbolzen (9) angeordnet sind, die die Klemmkörper, wie Bremskugeln (5), in den sich verengenden Konus zwischen der Trommel (1) und den Keilflächen (15) drücken, wenn der Käfig (2) in diese Richtung verdreht wird.

9. Antrieb nach Anspruch 7 oder 8, dadurch gekennzeichnet, daß der Käfig (2) auf der engen Seite des Konus schräge Flächen (22) aufweist, deren Schräge so verläuft, daß die Ausnehmungen mit zunehmendem Radius in Umfangsrichtung kleiner werden, und daß diese schrägen Flächen (22) die Klemmrotationskörper, wie Bremskugeln (5), aus dem sich verengenden Konus zwischen der Trommel (1) und den Keilflächen (15) drücken, wenn der Käfig (2) in diese Richtung verdreht wird.

10. Antrieb nach einem der vorstehenden Ansprüche, dadurch gekennzeichnet, daß das Motorgehäuse, gegebenenfalls über einen Schalthebel (7), mit der Schaltnocke (10) verbunden ist und die Antriebswelle des Motors (13), gegebenenfalls über ein Zahnradgetriebe, einen Riemen od.dgl. und gegebenenfalls über die Spindel (11) mit der Trommel (1) verbunden ist.

11. Antrieb nach Anspruch 1 bei einer zweiflügeligen Türe mit symmetrischer Doppelspindel (11), dadurch gekennzeichnet, daß der Freilauf zwischen den Einzelspindeln (11) im wesentlichen in der Mitte der Türöffnung angeordnet ist.

12. Antrieb nach Anspruch 1 für eine zweiflügelige Türe mit pneumatischem oder hydraulischem Antrieb, dadurch gekennzeichnet, daß der Antrieb an einem der Türflügel angreift und daß die beiden Türflügel über eine symmetrische Doppelspindel miteinander verbunden sind, in deren Mitte der Freilauf angeordnet ist, und daß die Verstellung der Bremsbacken (3), gegebenenfalls durch Verdrehung der Schaltnocke (10), durch eine hydraulische oder pneumatische Zylinder-Kolben-Einheit (21), die auf einen Schalthebel (7) wirkt, erfolgt.

13. Antrieb nach Anspruch 12, dadurch gekennzeichnet, daß die hydraulische oder pneumatische Zylinder-Kolben-Einheit (21) einen einfach wirkenden, mit einer Rückholfeder versehenen Zylinder aufweist.
